# EUROPÄISCHE PATENTSCHRIFT

(11) **EP 1 295 650 B1**
(45) Veröffentlichungstag und Bekanntmachung des Hinweises auf die Patenterteilung: **31.01.2007**
(21) Anmeldenummer: 02018883.5
(22) Anmeldetag: 24.08.2002
(51) Int. Cl.: B07B 9/00

(54) **Anlage zum Reinigen von holzhaltigem Gut**
Plant for cleaning wood containing material
Installation pour le nettoyage de matières contenant du bois

(30) Priorität: 21.09.2001 DE 10146512
(43) Veröffentlichungstag der Anmeldung: 26.03.2003
(73) Patentinhaber: B. Maier Zerkleinerungstechnik GmbH, 33626 Bielefeld (DE)
(72) Erfinder: Loth, Robert, 32791 Lage-Müssen (DE)
(74) Vertreter: Weitzel, Wolfgang

(56) Entgegenhaltungen:
- DE-A- 19 539 499
- DE-A- 19 821 437
- PATENT ABSTRACTS OF JAPAN vol. 1998, no. 13, 30. November 1998 (1998-11-30) & JP 10 211444 A (FUJI CAR MFG CO LTD), 11. August 1998 (1998-08-11)

## Beschreibung

Die Erfindung betrifft das Gebiet der Zerkleinerungstechnik, insbesondere das Gebiet des Zerkleinerns von Altholz. Dabei handelt es sich beispielsweise um Restholz aus Sägewerken, um Industrie-Restholz, um Recycling-Holz und um sonstiges Altholz.

Die Erfindung bezieht sich gemäß Anspruch 1 auf eine Anlage zum Reinigen von holzhaltigem Gut.

DE 198 21 437 A1 beschreibt eine Anlage zum Reinigen von Hackschnitzeln. Die Anlage umfasst eine Vielzahl von Aggregaten wie ein Vibrationssieb, einen Eisenabscheider, einen Schwergutabscheider, einen Nichteisen-Sichter und - Abscheider.

Solche Anlagen sind außerordentlich umfangreich und umfassen eine Vielzahl von Behandlungs- und Bearbeitungsstationen, die durch Förderanlagen und Zwischenbunker miteinander verbunden sind. Dabei geht es um das Zerkleinern des anfallenden Gutes, aber auch um dessen Reinigen. Aus dem zerkleinerten Altholz müssen Fremdstoffe herausgeholt werden. Hierzu gehören nichtmetallische Schwerstoffe wie Steine, ferner Metalle, und zwar Eisen wie auch Nicht-Eisen-Metalle (NE-Metalle).

Der Erfindung liegt die Aufgabe zugrunde, eine solche Anlage derart zu gestalten, dass sie ihre Funktionen in effizienter Weise erfüllt, dass sie einfach und kostengünstig im Aufbau ist, und dass sie möglichst kompakt ist und somit wenig Raum beansprucht. Diese Aufgabe wird durch die Merkmale von Anspruch 1 gelöst. Der Kerngedanke besteht darin, die Schwerstoffabscheidung der NE-Abscheidung nachzuschalten. Dies beruht auf der folgenden Überlegung: Die NE-Metalle sind im allgemeinen leichter als die schweren Verunreinigungen wie Steine oder dergleichen. Deswegen kann die Abscheidung der NE-Metalle mit relativ "sanften" Mitteln erfolgen, im allgemeinen mittels eines Luftstromes, der quer zum Hauptstrom aufgebracht wird, oder mittels einer schwenkbaren Klappe, um die NE-Metalle aus dem Hauptstrom abzulenken. Dies bedeutet, dass der Hauptstrom - enthaltend Schwerschmutz und Luft - wenig beeinträchtigt wird. Dies ist wichtig für die Ausscheidung des Schwerschmutzes, bei der es auf besonders kontrollierte Verhältnisse der Strömung ankommt.

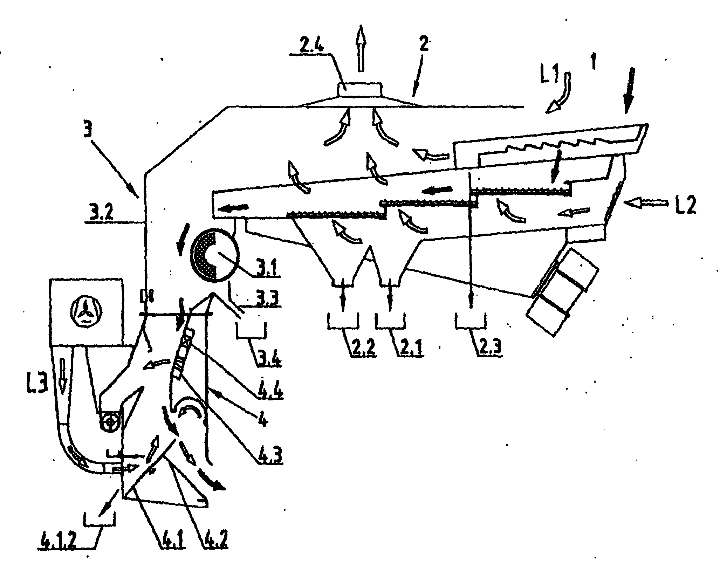

Die Erfindung ist anhand der Zeichnung näher erläutert.

Die darin dargestellte Anlage ist wie folgt aufgebaut:

Die Anlage weist einen Einführbereich 1 auf. Hier wird das zu behandelnde holzhaltige Gut zugeführt. Im Falle des dargestellten Ausführungsbeispieles besteht das Gut aus zerkleinerten Paletten. Die Bruchstücke enthalten Verunreinigungen wie Nägel, Sand und Steine.

An den Einführbereich 1 ist eine Vorsichter-Station 2 angeschlossen. Hier werden Sand sowie übergroße Partikel ausgeschieden. Siehe die Sandtrichter 2.1, 2.2 sowie den Auffangbehälter 2.3 für die übergroßen Partikel.

Der Materialstrom wird dem Einführbereich 1 zusammen mit einem Luftstrom L1 zugeführt. Ein weiterer Luftstrom L2 wird der Vorsichter-Station 2 unter der Feingutabsiebung zugeführt. Durch die vereinigten Luftströme L1 und L2 wird die Förderung des Gutes unterstützt, in der Darstellung von rechts nach links. Dabei werden auch Stäube und Folien abgeführt, und zwar durch einen im oberen Teil der Vorsichter-Station 2 befindlichen Staubauslaß 2.4.

Die Förderung des Gesamtstromes, gebildet aus dem Gut einerseits und der Luft andererseits erfolgt in einem weitgehend geschlossenen Kanalsystem. Siehe das Gehäuse 2.5 der Vorsichter-Station 2 sowie die nachfolgenden Gehäusebeziehungsweise Kanalbereiche.

An die Vorsichter-Station schließt sich ein Magnetabscheider 3 an. Dieser weist eine Magnetwalze 3.1 auf. Hier findet eine Umlenkung des Gesamtstromes um etwa 90 Grad statt, und zwar aus der horizontalen in eine vertikale Bewegung. Der zugehörende Kanalabschnitt 3.2 des Magnetabscheiders 3 ist entsprechend gestaltet. Dabei werden Eisenteile durch einen Seitenkanal 3.3 einem Auffangbehälter 3.4 zugeführt.

Es schließt sich nunmehr ein wenigstens annähernd vertikaler Kanalabschnitt 4 an. Dieser kann als Fallstrecke bezeichnet werden. Der von Eisenteilen befreite Strom aus Gut und Luft wandert hierin nach unten. Im unteren Bereich des vertikalen Kanalabschnittes 4 befindet sich eine Leitwand 4.1 sowie eine Leitwand 4.2. Die Leitwand 4.1 dient zum Abführen von Schwerstoffen. Diese werden in einem Schwerstoffbehälter 4.1.2 aufgefangen. Ein weiterer Luftstrom L3 wird dabei entgegen der Fallrichtung der Schwerstoffe in den vertikalen Kanalabschnitt 4 eingeführt. Dieser dient dazu, den Holzschnitzelstrom aus der vertikalen in eine horizontale Richtung umzulenken und zu verhindern, dass Holzschnitzel entlang der Leitwand 4.1 nach außen wandern.

Man erkennt ferner im vertikalen Kanalabschnitt 4 eine bewegliche Leitwand 4.3. Diese ist am oberen Ende des vertikalen Kanalabschnittes angelenkt und kann im Kanal verschwenkt werden. Stromaufwärts ist ein Sensor 4.4 angeordnet. Dieser kann in der Leitwand bzw. in der gegenüberliegenden Abschlusswand angebracht sein. Der Sensor kann einteilig, als auch aus mehreren Einzelelementen bestehen. Er erfasst NE-Metalle bei deren Auftreten und steuert über einen hier nicht dargestellten Prozessor eine schwenkbare Klappe oder einzelne Klappen-Segmente, die im gegebenen Zeitpunkt NE-Metalle auswerfen. Alternativ können die NE-Teile auch mittels eines Luftstromes aus Luftdüsen ausgeblasen werden.

Der von allen Verunreinigungen befreite Holzschnitzelstrom wandert durch den unteren Umlenkkanal, wo er einer Weiterverarbeitung zugeführt wird.

Die gesamte Anlage arbeitet bei hoher Sichtungsgenauigkeit. Das heißt, dass die einzelnen auszusortierenden Stoffe wie Schwergut, Staub, NE-Metalle und so weiter bei großer Trenngenauigkeit vom Gutstoff entfernt werden.

Die Anlage ist einfach im Aufbau. Sie ist sehr kompakt und benötigt somit geringen Raum.

Ein ganz wichtiger Vorteil besteht darin, dass auch bestehende Anlagen gemäß der Erfindung umgerüstet werden können.

## Patentansprüche

1. Anlage zum Reinigen von holzhaltigem Gut, mit den folgenden Merkmalen:
1.1 mit einem Einführbereich (1);
1.2 mit einem Magnetabscheider (3), der eine Magnetwalze (3.1) aufweist;
1.3 mit einem unter der Magnetwalze (3.1) angeordneten Windsichter als Schwergutabscheider;
1.4 mit einem Luftsystem zum Sichten des Gutstromes mit folgendem Aufbau:
1.4.1 um die Magnetwalze (3.1) ist ein oberer Umlenkkanalabschnitt (3.2) zum Umlenken des Gutstromes aus der Horizontalen nach unten herumgeführt;
1.4.2 an den oberen Umlenkkanalabschnitt ist eine Fallstrecke (4) angeschlossen;
1.4.3 an das untere Ende der Fallstrecke ist ein unterer Umlenkkanal angeschlossen;
1.4.4 der untere Bereich der Fallstrecke enthält einen Schwerstoffabscheider (4.1);
1.4.5 ein Luftkanal zum Zurückhalten von Gut mündet im unteren Teil der Fallstrecke (4);
1.4.6 in der Fallstrecke (4) ist eine bewegliche Leitwand (4.3) mit Schwenkklappen oder Luftdüsen zum Auswerfen von Nicht-Eisen-Metallen vorgesehen.

2. Anlage nach Anspruch 1, **dadurch gekennzeichnet, dass** die einzelnen Behandlungsstationen (1 bis 5) oder deren größter Teil in einem einzigen Gehäuse angeordnet sind, so dass die gesamte Anlage eine kompakte Einheit bildet.

3. Anlage nach Anspruch 1 oder 2, **dadurch gekennzeichnet, dass** dem Einführbereich (1) ist eine Vorsichter-Station (2) nachgeschaltet ist

## Claims

1. Installation for cleaning wood-containing material, with the following features:
1.1 a feeding zone (1);
1.2 a magnetic separator (3) comprising a magnetic roller (3.1);
1.3 an air separator for separating heavy materials which is situated underneath the magnetic roller (3.1); and
1.4 an air system for separating the flow of material with the following structure:
1.4.1 an upper deflection conduit section (3.2) is guided about the magnetic roller (3.1) to deflect the flow of material downwards from the horizontal;
1.4.2 a drop section (4) is connected to the upper deflection conduit section;
1.4.3 a lower deflection conduit is connected to the lower end of the drop section,
1.4.4 the lower section of the drop section contains a heavy material separator (4.1);
1.4.5 an air conduit for holding back material opens into the lower part of the drop section (4);
1.4.6 a movable baffle wall (4.3) with pivoting flaps or air nozzles for ejecting non-ferrous metals is provided in the drop section (4).

2. Installation according to claim 1, **characterised in that** the individual treatment stations (1 to 5), or the greatest proportion thereof, are arranged in a single housing so that the entire installation forms a compact unit.

3. The installation according to claim 1 or 2, **characterised in that** a pre-separating station (2) is arranged downstream of the feeding zone (1).

## Revendications

1. Installation de nettoyage de matières contenant du bois, dotée des comprenant :
1.1 une zone d'alimentation (1) ;
1.2 un séparateur magnétique (3) présentant un rouleau magnétique (3.1) ;
1.3 sous le rouleau magnétique (3.1) un séparateur pneumatique en tant que séparateur des matières lourdes ;
1.4 un système pneumatique pour séparer le flux de matière, et possédant la structure suivante :
1.4.1 autour du rouleau magnétique (3.1) un segment de canal de déviation supérieur (3.2) dévie le flux de matière hors de l'horizontale vers le bas ;
1.4.2 au segment de canal de déviation supérieur se raccorde une goulotte de chute (4) ;
1.4.3 à l'extrémité inférieure de la goulotte de chute se raccorde un canal de déviation inférieur ;
1.4.4 la zone inférieure de la goulotte de chute contient un séparateur de matières lourdes (4.1) ;
1.4.5 un canal pneumatique pour retenir la matière débouche dans la partie inférieure de la goulotte de chute (4) ;
1.4.6 dans la goulotte de chute (4), une paroi de guidage mobile (4.3) dotée de clapets mobiles ou de buses à air permet d'éjecter des métaux non ferreux.

2. Installation selon la revendication 1,
**caractérisée en ce que**
les postes de traitement individuels (1 à 5) ou leur majeure partie sont disposés dans un caisson unique, de telle sorte que l'ensemble de l'installation forme une unité compacte.

3. Installation selon la revendication 1 ou 2,
**caractérisée par**
un poste de contrôle (2) en aval de la zone d'alimentation (1).
